(19) Europäisches Patentamt
European Patent Office
Office européen des brevets

(11) **EP 3 155 444 B1**

(12) **EUROPÄISCHE PATENTSCHRIFT**

(45) Veröffentlichungstag und Bekanntmachung des Hinweises auf die Patenterteilung:
**05.10.2022 Patentblatt 2022/40**

(21) Anmeldenummer: **15722979.0**

(22) Anmeldetag: **06.05.2015**

(51) Internationale Patentklassifikation (IPC):
**G01S 13/34** (2006.01)    **G01S 13/42** (2006.01)
**G01S 13/58** (2006.01)    **G01S 7/35** (2006.01)
G01S 13/931 (2020.01)    G01S 13/536 (2006.01)
G01S 13/02 (2006.01)

(52) Gemeinsame Patentklassifikation (CPC):
**G01S 13/42; G01S 7/354; G01S 13/34;**
**G01S 13/343; G01S 13/584;** G01S 7/356;
G01S 13/536; G01S 13/931; G01S 2013/0245

(86) Internationale Anmeldenummer:
**PCT/EP2015/059897**

(87) Internationale Veröffentlichungsnummer:
**WO 2015/188987 (17.12.2015 Gazette 2015/50)**

(54) **VERFAHREN ZUR OBJEKTORTUNG MIT EINEM FMCW-RADAR**

METHOD FOR OBJECT LOCATION WITH AN FMCW-RADAR

PROCÉDÉ DE LOCALISATION D'UN OBJET AVEC UN RADAR FMCW

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität: **10.06.2014 DE 102014210993**
           **08.07.2014 DE 102014213190**

(43) Veröffentlichungstag der Anmeldung:
**19.04.2017 Patentblatt 2017/16**

(73) Patentinhaber: **Robert Bosch GmbH**
**70442 Stuttgart (DE)**

(72) Erfinder:
• **SCHOOR, Michael**
**70195 Stuttgart (DE)**
• **LOESCH, Benedikt**
**70195 Stuttgart (DE)**

(56) Entgegenhaltungen:
EP-A1- 2 045 877      WO-A2-2010/115418
JP-A- 2003 315 447      US-A- 5 652 589
US-A1- 2008 150 795

**Beschreibung**

Stand der Technik

Die Erfindung betrifft ein Verfahren zur Ortung von Objekten mit einem MIMO-FMCW-Radar, bei dem:

- ein rampenförmig frequenzmoduliertes Radarsignal gesendet wird, dessen Modulationsmuster eine Sequenz zeitversetzt aufeinander folgender Rampen aufweist,
- im Takt der aufeinander folgenden Rampen periodisch zwischen mindestens zwei Schaltzuständen umgeschaltet wird, die sich in der Auswahl der zum Senden und zum Empfang verwendeten Antennenelemente unterscheiden,
- empfangene Radarechos mit dem gesendeten Signal in ein Basisband herunter gemischt werden,
- die für die verschiedenen Schaltzustände erhaltenen Basisbandsignale in Spektren transformiert werden, anhand derer die Abstände und Relativgeschwindigkeiten der Radarziele bestimmt werden, und
- zur Bestimmung von Ortungswinkeln der Radarziele die Phasen der für verschiedene Schaltzustände erhaltenen Basisbandsignale miteinander verglichen werden.

Weiterhin betrifft die Erfindung einen Radarsensor, insbesondere für Kraftfahrzeuge, der zur Durchführung dieses Verfahrens ausgebildet ist.

Bei Kraftfahrzeugen werden FMCW-Radarsensoren zur Erfassung des Verkehrsumfelds eingesetzt, insbesondere zur Ortung anderer Fahrzeuge. Die Ortungsergebnisse können für verschiedene Assistenzfunktionen genutzt werden, beispielsweise für eine automatische Abstandsregelung, eine automatische Kollisionswarnung oder auch die automatische Auslösung eines Notbremsvorgangs bei akuter Kollisionsgefahr.

Die Frequenz des Basisbandsignals entspricht dem Frequenzunterschied zwischen dem zu einem gegebenen Zeitpunkt gesendeten Signal und dem zum selben Zeitpunkt empfangenen Signal. Aufgrund der Frequenzmodulation des Sendesignals ist dieser Frequenzunterschied von der Laufzeit des Signals vom Radarsensor zum Objekt und zurück und somit vom Abstand des Objekts abhängig. Aufgrund des Doppler-Effektes enthält der Frequenzunterschied jedoch auch einen Anteil, der durch die Relativgeschwindigkeit des Objekts bedingt ist. Die Messung des Frequenzunterschieds auf einer einzelnen Rampe erlaubt deshalb noch keine Bestimmung des Abstands und der Relativgeschwindigkeit, sondern liefert nur eine lineare Beziehung zwischen diesen Größen. Diese Beziehung lässt sich in einem Abstands/Geschwindigkeits-Diagramm (R-v-Diagramm) als Gerade darstellen.

Um eindeutige Werte für den Abstand und die Relativgeschwindigkeit zu erhalten, wird bei einem gebräuchlichen Typ eines FMCW-Radars mit einander abwechselnden steigenden und fallenden Frequenzrampen gearbeitet. Im R-v-Diagramm erhält man dann für jede Rampe eine andere Gerade, und der Abstand und die Relativgeschwindigkeit des Objekts sind durch den Schnittpunkt dieser beiden Geraden gegeben.

In einer anderen Ausführungsform wird mit einer Folge von identischen, verhältnismäßig kurzen Frequenzrampen, sogenannten "Rapid Chirps" gearbeitet, die im Verhältnis zu ihrer Dauer einen hohen Frequenzhub haben und deshalb so steil sind, dass im Basisbandsignal der abstandsabhängige Anteil dominiert, während der Doppleranteil nur eine kleine Korrektur darstellt. Diese Korrektur wird dadurch bestimmt, dass man die Phasenänderung des Basisbandsignals von Rampe zu Rampe verfolgt. Dabei wird der Umstand ausgenutzt, dass die Phase des Basisbandsignals relativ empfindlich auf die geringe Änderung des Objektsabstands reagiert, die aus der Relativbewegung des Objektes während des kurzen Zeitintervalls von einer Frequenzrampe zur nächsten resultiert.

Da die Phasenänderung jedoch eine periodische Funktion der Relativgeschwindigkeit ist, lässt sich die Relativgeschwindigkeit nur dann eindeutig bestimmen, wenn sie so klein ist, dass die Phasenänderung weniger als eine halbe Periode (also weniger als $\pi$) beträgt.

Zumeist weist der Radarsensor mehrere Antennenelemente auf, die in Abstand zueinander auf einer Linie, beispielsweise einer Horizontalen angeordnet sind, so dass unterschiedliche Azimutwinkel der georteten Objekte zu Differenzen in den Lauflängen führen, die die Radarsignale vom Objekt bis zum jeweiligen Antennenelement zurückzulegen haben. Diese Lauflängendifferenzen führen zu entsprechenden Unterschieden in der Phase der Signale, die von den Antennenelementen empfangen und in den zugehörigen Auswertungskanälen ausgewertet werden. Durch Abgleich der in den verschiedenen Kanälen empfangenen (komplexen) Amplituden mit entsprechenden Amplituden in einem Antennendiagramm lässt sich dann der Einfallswinkel des Radarsignals und damit der Azimutwinkel des georteten Objekts bestimmen.

Bei einem MIMO-Radar (Multiple Input / Multiple Output) wird ein größeres Winkelauflösungsvermögen dadurch erreicht, dass man nicht nur mit mehreren empfangenden Antennenelementen arbeitet, sondern auch mit mehreren sendenden Antennenelementen, wobei unterschiedliche Kombinationen von sendenden und empfangenden Antennenelementen ausgewertet werden. Die variierenden Positionen der sendenden Antennenelemente führen dann zu zusätzlichen Phasendifferenzen und damit zu Signalen, die äquivalent sind zu Signalen, die man mit einer Konfiguration mit einem einzelnen sendenden Antennenelement und zusätzlichen (virtuellen) empfangenden Antennenelementen erhalten würde. Auf diese Weise wird die Apertur virtuell vergrößert und damit die Winkelauflösung verbessert.

Bei einem MIMO-Radar müssen die verschiedenen Sendesignale zueinander orthogonal sein. Das lässt sich beispielsweise durch Codemultiplex, Frequenzmultiplex oder Zeitmultiplex erreichen. Das Codemultiplex-Verfahren erfordert jedoch einen hohen Aufwand und ermöglicht nur eine begrenzte Orthogonalität der Signale. Bei Frequenzmultiplex-Verfahren besteht der Nachteil, dass die Phase und die Doppler-Verschiebung von der jeweiligen Wellenlänge abhängig sind. Das hier vorgeschlagene Verfahren basiert deshalb auf dem Zeitmultiplex-Prinzip. Allerdings besteht dabei das Problem, dass Relativbewegungen der georteten Objekte in Verbindung mit dem Zeitversatz zwischen den verschiedenen Schaltzuständen zu Phasenunterschieden führen, die die nachfolgende Winkelschätzung erschweren. Eine Möglichkeit, diese Phasenverschiebungen zu kompensieren, besteht darin, dass anhand der gemessenen Relativgeschwindigkeiten die durch die Objektbewegungen verursachen Phasenverschiebungen geschätzt werden, was jedoch nur mit begrenzter Genauigkeit möglich ist.

Als nächstkommender Stand der Technik ist aus der EP 2 045 877 A1 ein Radarsystem und ein Verfahren bekannt, bei dem das Radarsystem einen ersten Sendeabschnitt von Antennenelementen, einen zweiten Sendeabschnitt von Antennenelementen und einen Empfangsabschnitt von Antennenelementen umfasst, so dass die empfangenden Antennenelemente eine Vielzahl von Untergruppen bilden, die reale und synthetische Antennenelemente darstellen. Das Radarsystem umfasst ferner eine Sende-/Empfangsvorrichtung mit einer Schaltmatrix. Mindestens ein erstes und ein zweites schaltendes Sendeantennenelement sind konfiguriert und zeitmultiplexiert, wobei eine Empfangsapertur der Empfangsantennenelemente vergrößert wird. Ein erstes Sendesignal wird von den realen Antennenelementen empfangen und ein zweites Sendesignal wird von den realen Antennenelementen empfangen und so kombiniert, dass die von dem ersten schaltenden Sendeantennenelement empfangenen Signale ein von dem realen Empfangsantennenelement empfangenes Signal darstellen, und das von dem zweiten schaltenden Sendeantennenelement empfangene Signal ein von dem synthetischen Empfangsantennenelement empfangenes Signal darstellt. Darüber ist auf WO 2010/115418 A2, JP 2003 315447 A, US 1008/150795 A1 und US 5 652 589 A als Stand der Technik zu verweisen.

Offenbarung der Erfindung

Aufgabe der Erfindung ist es, ein Zeitmultiplex-Verfahren für ein MIMO-Radar anzugeben, das es eine genauere Winkelschätzung erlaubt.

Diese Aufgabe wird erfindungsgemäß durch die Kombination der Merkmale des unabhängigen Anspruchs gelöst.

Die Erfindung erlaubt es, die Basisbandsignale, die nacheinander für eine beliebige Anzahl von Schaltzuständen erhalten werden, auf einen gemeinsamen Referenzzeitpunkt zu beziehen, so dass die durch die Objektbewegungen verursachten Phasenverschiebungen eliminiert werden, ohne dass dazu ein genauer Schätzwert für die Relativgeschwindigkeiten der Objekte benötigt wird.

Vorteilhafte Ausgestaltungen der Erfindung sind in den Unteransprüchen angegeben.

Im folgenden wird ein Ausführungsbeispiel anhand der Zeichnung näher erläutert.

Es zeigen:

Fig. 1 ein Blockdiagramm eines FMCW-Radarsystems;

Fig. 2 ein detaillierteres Blockdiagramm eines MIMO-Radarsensors;

Fig. 3 ein Modulationsmuster mit wiederholten Abfolgen von drei zeitversetzten Rampen, die mit unterschiedlichen Antennenkonfigurationen gesendet und empfangen werden;

Fig. 4 ungefensterte Basisbandsignale zu den drei Rampen nach Fig. 3, dargestellt in Form der Amplitudenbeträge als Funktionen eines Rampenindex j;

Fig. 5 eine einzelne Fensterfunktion;

Fig. 6 die Basisbandsignale gemäß Fig. 4 nach Fensterung mit der Fensterfunktion nach Fig. 5;

Fig. 7 drei zeitversetzte Fensterfunktionen; und

Fig. 8 die Basisbandsignale gemäß Fig. 4 nach Fensterung mit den Fensterfunktionen nach Fig. 7.

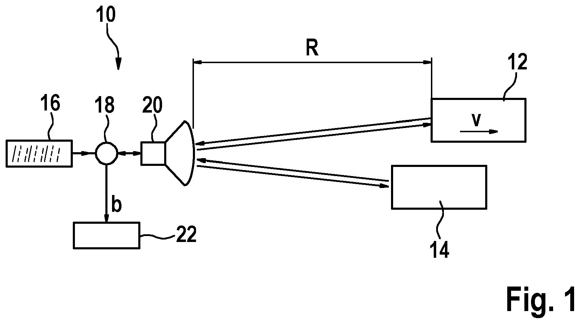

In Fig. 1 ist als vereinfachtes Blockdiagramm ein FMCW-Radarsensor 10 dargestellt, der beispielsweise vorn in einem Kraftfahrzeug eingebaut ist und dazu dient, Abstände R und Relativgeschwindigkeiten v von Objekten 12, 14 zu messen, beispielsweise von vorausfahrenden Fahrzeugen. Der Radarsensor 10 weist einen spannungsgesteuerten Oszillator 16 auf, der ein frequenzmoduliertes Sendesignal über einen Mischer 18 an eine Sende- und Empfangseinrichtung 20 liefert, von der das Signal in Richtung auf die Objekte 12, 14 ausgesandt wird.

Das an den Objekten reflektierte Signal wird von der Sende- und Empfangseinrichtung 20 empfangen und im Mischer 18 mit einem Anteil des Sendesignals gemischt. Auf diese Weise erhält man ein Basisbandsignal b, das in einer elektronischen Auswerte- und Steuereinrichtung 22 weiter ausgewertet wird.

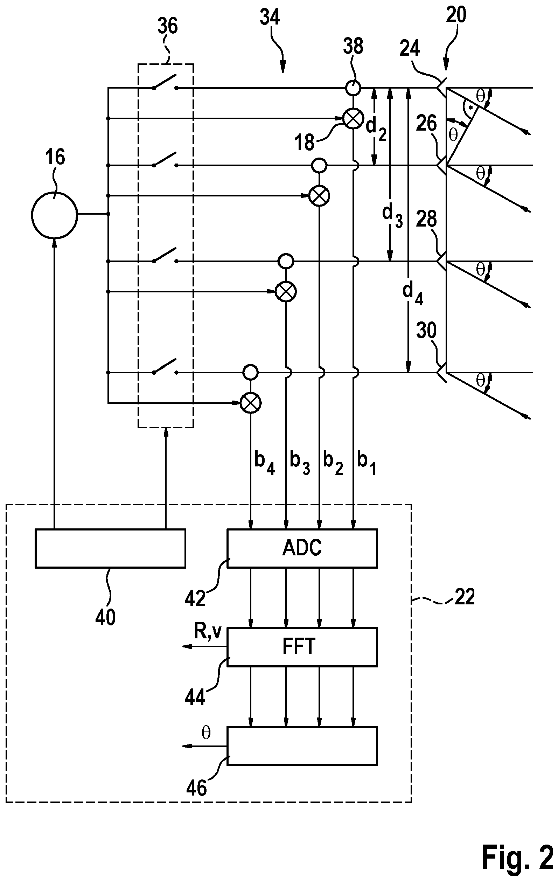

Wie in Fig. 2 gezeigt ist, weist die Sende- und Empfangseinrichtung 20 vier Antennenelemente 24, 26, 28, 30 auf, die zusammen eine planare Gruppenantenne bilden. Der Radarsensor wird so in das Kraftfahrzeug eingebaut, dass die Antennenelemente 24 - 30 auf gleicher Höhe nebeneinander liegen, so dass ein gewisses Winkelauflösungsvermögen des Radarsensors in der Horizontalen (im Azimut) erreicht wird. In Fig. 2 sind symbolisch Radarstrahlen dargestellt, die von den Antennenelementen unter einem Azimutwinkel $\theta$ empfangen werden.

Ein Hochfrequenzteil 34 zur Ansteuerung der Antennenelemente wird beispielsweise durch ein oder mehrere MMICs (Monolithic Microwave Integrated Circuits) gebildet und umfasst ein Schaltnetzwerk 36, über das die einzelnen Antennenelemente selektiv mit dem Oszillator 16 verbindbar sind. Die von den Antennenelementen 24 - 30 empfangenen Radarechos werden jeweils mit Hilfe eines Zirkulators 38 ausgekoppelt und dem Mischer 18 zugeführt, wo sie mit dem vom Oszillator 16 gelieferten Sendesignal gemischt werden. Auf diese Weise erhält man für jedes der Antennenelemente ein Basisbandsignal b1, b2, b3, b4, das der elektronischen Steuer- und Auswerteeinrichtung 22 zugeführt wird.

Die Steuer- und Auswerteeinrichtung 22 enthält einen Steuerungsteil 40, der die Funktion des Oszillators 16 und des Schaltnetzwerkes 36 steuert. Die Frequenz des vom Oszillator 16 gelieferten Sendesignals wird periodisch in Form einer Folge von steigenden und/oder fallenden Frequenzrampen moduliert.

Weiterhin enthält die Steuer- und Auswerteeinrichtung 22 einen Auswerteteil mit einem vierkanaligen Analog/Digital-Wandler 42, der die von den vier Antennenelementen erhaltenen Basisbandsignale b1 - b4 digitalisiert und aufzeichnet. Die so erhaltenen Zeitsignale werden dann kanalweise in einer Transformationsstufe 44 durch Schnelle Fouriertransformation in entsprechende Frequenzspektren umgewandelt. In diesen Frequenzspektren zeichnet sich jedes geortete Objekt in der Form eines Peaks ab, dessen Frequenzlage von der Signallaufzeit vom Radarsensor zum Objekt und zurück zum Radarsensor sowie - aufgrund des Doppler-Effektes - von der Relativgeschwindigkeit des Objekts abhängig ist. Aus den Frequenzlagen zweier Peaks, die für dasselbe Objekt erhalten wurden, jedoch auf Frequenzrampen mit unterschiedlicher Steigung, beispielsweise einer steigenden Rampe und einer fallenden Rampe, lässt sich dann der Abstand R und die Relativgeschwindigkeit v des betreffenden Objektes berechnen.

Wie in Fig. 2 anhand der Radarstrahlen schematisch dargestellt wird, führen die unterschiedlichen Positionen der Antennenelemente 24 - 30 dazu, dass die Radarstrahlen, die von ein und demselben Antennenelement emittiert wurden, am Objekt reflektiert wurden und dann von den verschiedenen Antennenelementen empfangen werden, unterschiedliche Lauflängen zurücklegen und deshalb Phasenunterschiede aufweisen, die vom Azimutwinkel $\theta$ des Objekts abhängig sind. Auch die zugehörigen Zwischenfrequenzsignale b1 - b4 weisen entsprechende Phasenunterschiede auf. Auch die Amplituden (-beträge) der empfangenen Signale sind von Antennenelement zu Antennenelement unterschiedlich, ebenfalls abhängig vom Azimutwinkel $\theta$. Die Abhängigkeit der komplexen Amplituden, also der Absolutbeträge und Phasen, der empfangenen Signale vom Azimutwinkel $\theta$ kann für jedes Antennenelement in Form eines Antennendiagramms in der Steuer- und Auswerteeinrichtung 22 hinterlegt sein. Ein Winkelschätzer 46 vergleicht für jedes geortete Objekt (jeden Peak im Frequenzspektrum) die in den vier Empfangskanälen erhaltenen komplexen Amplituden mit dem Antennendiagramm, um so den Azimutwinkel $\theta$ des Objekts zu schätzen. Als wahrscheinlichster Wert für den Azimutwinkel wird dabei der Wert angenommen, bei dem die gemessenen Amplituden am besten mit den in den Antennendiagrammen abgelesenen Werten korrelieren.

Bei dem hier beschriebenen MIMO-Radar sind jedoch die komplexen Amplituden in den vier Kanälen auch davon abhängig, welches der vier Antennenelemente 24, 26, 28, 30 als Sendeelement benutzt wird. Beispielsweise erlaubt es das Schaltnetzwerk 36, eine erste Frequenzrampe mit dem Antennenelement 24 zu senden (das Sendearray besteht dann nur aus dem einzigen Antennenelement 24), dann auf das Antennenelement 26 umzuschalten und dann nacheinander auf die Antennenelemente 28 und 30, wonach ein neuer Zyklus beginnt. Auf diese Weise erhält man 4 $\times$ 4 = 16 verschiedene Konstellationen, die durch das folgende Signalmodell beschrieben werden können.

Für das planare lineare Antennenarray mit den Antennenelementen 24, 26, 28, 30 als Empfangsarray hat (unter der idealisierten Annahme isotroper Antennenelemente) der Steuerungsvektor $a_{r\mu}(\theta)$ die folgenden Komponenten:

$$a_{r\mu}(\theta) = \exp(\, 2\pi i \cdot (d_{r\mu}/\lambda) \cdot \sin(\theta)\, ), \quad \mu = 1, ..., 4$$

Dieser Steuerungsvektor bestimmt die Phasenbeziehungen zwischen den komplexen Amplituden der Signale, die von den vier Antennenelementen empfangen werden. Der Index $\mu$ bezeichnet dabei das Antennenelement, und die Größen $d_{r\mu}$ geben die Positionen der Antennenelemente in der Horizontalen an, bezogen auf irgendeinen beliebig gewählten Ursprung.

Entsprechend hat der Steuerungsvektor $a_{tv}(\theta)$ für das Sendearray die Komponenten

$$a_{tv}(\theta) = \exp ( 2\pi i \cdot (d_{tv}/\lambda) \cdot \sin(\theta) ), \quad v = 1, ..., 4.$$

Bei dem in Fig. 1 gezeigten Beispiel eines monostatischen Arrays mit vier Antennenelementen kann man den Ort des Antennenelements 24 als Koordinatenursprung nehmen, so dass gilt:

$$d_{r1} = d_{t1} = 0,$$

$d_{r2} = d_{t2} = d_2,$
$d_{r3} = d_{t3} = d_3$ und
$d_{r4} = d_{t4} = d_4.$

Für die Winkelschätzung wird nun nach dem MIMO-Prinzip der virtuelle Array-Vektor gebildet, indem das Kronecker-Produkt aus $a_{tv}(\theta)$ und $a_{r\mu}(\theta)$ gebildet wird:

$$a(\theta) = ( \quad a_{t1}(\theta) \cdot a_{r1}(\theta), \quad a_{t1}(\theta) \cdot a_{r2}(\theta), \quad a_{t1}(\theta) \cdot a_{r3}(\theta), \quad a_{t1}(\theta) \cdot a_{r4}(\theta),$$

$$a_{t2}(\theta) \cdot a_{r1}(\theta), \quad a_{t2}(\theta) \cdot a_{r2}(\theta), \quad a_{t2}(\theta) \cdot a_{r3}(\theta), \quad a_{t2}(\theta) \cdot a_{r4}(\theta),$$

$$a_{t3}(\theta) \cdot a_{r1}(\theta), \quad a_{t3}(\theta) \cdot a_{r2}(\theta), \quad a_{t3}(\theta) \cdot a_{r3}(\theta), \quad a_{t3}(\theta) \cdot a_{r4}(\theta),$$

$$a_{t4}(\theta) \cdot a_{r1}(\theta), \quad a_{t4}(\theta) \cdot a_{r2}(\theta), \quad a_{t4}(\theta) \cdot a_{r3}(\theta), \quad a_{t4}(\theta) \cdot a_{r4}(\theta) \quad )$$

Der Produktvektor hat sechzehn Komponenten, entsprechend sechzehn Positionen von virtuellen Antennenelementen. Die Komponenten des Vektors haben die Form

$$a_{tv}(\theta) \cdot a_{r\mu}(\theta) = \exp ( 2\pi i \cdot ((d_{tv} + d_{r\mu}) / \lambda) \cdot \sin(\theta) ); \quad v = 1, ..., 4; \mu = 1, ...,4$$

Die virtuellen Antennenpositionen entsprechen somit den Summen, die sich aus den Größen d1 - d4 bilden lassen. Damit erstreckt sich das virtuelle Array in der Horizontalen über eine wesentlich größere Spanne, das heißt, es hat eine größere Apertur und führt damit zu einer höheren Winkelauflösung, da schon kleine Änderungen im Azimutwinkel $\theta$ zu größeren Phasenunterschieden führen.

Wahlweise ist es auch möglich, mit mehreren der Antennenelemente 24 - 30 gleichzeitig zu senden. Das entspricht einem zusätzlichen virtuellen SendeAntennenelement an der Position, die den geometrischen Mittelpunkt der sendenden Antennenelemente entspricht.

In anderen Ausführungsformen können auch anders gestaltete Antennenarrys eingesetzt werden, beispielsweise auch solche, bei denen die Antennenelemente unterschiedliche Abstände zu einander aufweisen. Ebenso sind bistatische Antennenkonzepte möglich, bei denen einige Antennenelemente nur zum Senden und andere nur zum Empfang benutzt werden.

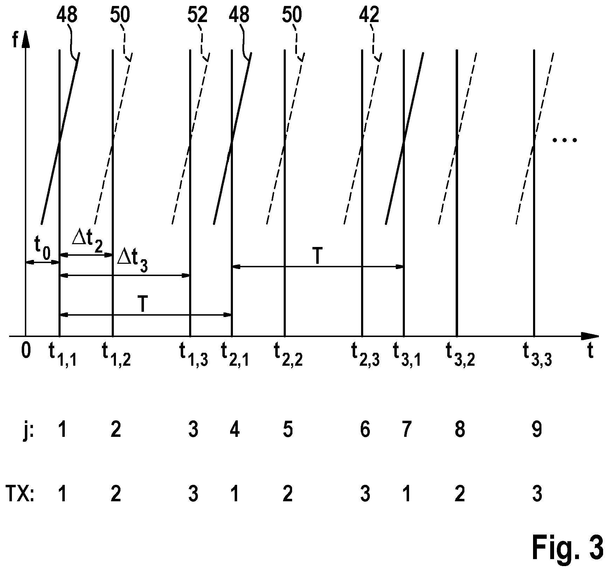

Für die Auswertung der Signale in den Empfangskanälen ist es jedoch wesentlich, dass zu jedem Zeitpunkt nur eine einzige der verschiedenen Konfigurationen von Sende-Antennenelementen aktiv ist, damit sich die empfangenen Signale in eindeutiger Weise den sendenden Antennenelementen zuordnen lassen. Aus diesem Grund wird die Steuerschaltung 40 so programmiert, das Sequenzen zeitlich aufeinander folgender, nicht überlappender, also zeitversetzter Rampen 48, 50, 52 gesendet werden, wie Fig. 3 gezeigt ist. Nach jeder Rampe wird das Schaltnetzwerk 36 in einen anderen Schaltzustand umgeschaltet, so dass die nächste Rampe mit einer anderen Auswahl von Antennenelementen gesendet wird. In Fig. 3 sind drei unterschiedliche Schaltzustände TX vorgesehen, zwischen denen zyklisch gewechselt wird. Die Rampen 48, 50, 52 unterscheiden sich somit in der Auswahl der Antennenelemente. Rampen, die das gleiche Bezugszeichen haben, werden mit derselben Auswahl von Antennenelementen gesendet. Insgesamt wird auf diese Weise beispielsweise eine Sequenz von 64 Rampen durchlaufen, bevor eine entsprechende Sequenz mit einer anderen Rampensteigung beginnt. Im gezeigten Beispiel haben alle Rampen 48, 50, 52 die gleiche Mittenfrequenz, die gleiche Dauer und den gleichen Frequenzhub und somit auch die gleiche Steigung. Dies ist jedoch nicht zwingend. Es sind auch Ausführungsformen denkbar, bei denen beispielsweise die Mittenfrequenzen variieren und ihrerseits eine langsam steigende oder fallende Rampe bilden.

In Fig. 3 werden die aufeinander folgenden Rampen 48, 50, 52 der Sequenz mit einem laufenden Index j gezählt. Außerdem ist für jede Rampe der zugehörige Schaltzustand TX des Schaltnetzwerkes 36 angegeben (TX = 1, 2 oder 3). Die Zeitmitte jeder Rampe ist mit $t_{TX,n}$ bezeichnet, wobei der erste Index "TX" den Schaltzustand angibt und der zweite Index n den aus drei Rampen (je einer für jeden Schaltzustand) bestehenden Zyklus angibt, in dem die betreffende Rampe liegt.

Bezogen auf einen festen Referenzzeitpunkt t = 0 hat die erste Rampe (j = 1) einen Zeitversatz $t_0$. Die zweite Rampe (j = 2) hat gegenüber der ersten Rampe einen Zeitversatz $\Delta t_2$, und die dritte Rampe (j = 3) hat gegenüber der ersten Rampe einen Zeitversatz $\Delta t_3$. Ein kompletter Zyklus, bestehend aus drei Rampen 48, 50, 52, hat die Dauer T. Es gilt folglich:

$$t_{1,n} = t_0 + n \cdot T$$

$$t_{2,n} = t_0 + \Delta t_2 + n \cdot T$$

$$t_{3,n} = t_0 + \Delta t_3 + n \cdot T.$$

Für jeden der drei Schaltzustände kann man auch einen Mittenzeitpunkt $t_{TX}$ der gesamten Sequenz angeben, indem man den Mittelwert sämtlicher Mittenzeitpunkte für die zu dem betreffenden Schaltzustand TX gehörenden Rampen-Mittenzeitpunkte $t_{TX,n}$ mittelt. Wenn N die Anzahl der Dreierzyklen innerhalb der Sequenz ist, so erhält man für jeden Schaltzustand TX den folgenden Mittenzeitpunkt $t_{TX}$:

$$t_1 = t_0 + T (N + 1)/2$$

$$t_2 = t_0 + \Delta t_2 + T (N+1)/2$$

$$t_3 = t_0 + \Delta t_3 + T (N+1)/2.$$

Die Messungen in den verschiedenen Schaltzuständen sind somit zeitlich ineinander verschachtelt und erstrecken sich insgesamt über eine relativ lange Zeitspanne N · T, während der effektive Zeitversatz (Differenz der Mittenzeiten) zwischen den einzelnen Zuständen lediglich $\Delta t_2$ bzw. $\Delta t_3$ beträgt.

In dem Transformationsblock 44 wird nun zunächst jede einzelne Rampe (mit dem Index j) einer eindimensionalen Fourier-Transformation unterzogen. Dazu wird das Basisbandsignal (komplexe Amplitude als Funktion der Zeit) an mehreren gleichmäßig über die Dauer der Rampe verteilten Zeitpunkten abgetastet. Die Abtastzeitpunkte werden mit einem Index k gezählt. Auf die so für die gesamte Rampe erhaltenen Abtastwerte wird dann eine Schnelle Fourier-Transformation (FFT) angewandt, die ein eindimensionales Spektrum für diese Rampe liefert, also eine komplexe Amplitude $s_j$ als Funktion einer Frequenzvariablen $f_k$.

Insgesamt erhält man so für jeden Schaltzustand eine Anzahl N verschiedener Spektren . Wenn man nun einen bestimmten Frequenzwert $f_k$ festhält, kann man die zugehörigen Amplituden $s_j (f_k)$ als eine Funktion des Rampenindex j auffassen, der dann als diskrete Zeitvariable dient, und man kann für diese Funktionen für jedes $f_k$ erneut eine schnelle Fourier-Transformation nach dem Rampenindex j ausführen. Das Ergebnis ist eine Funktion, die die Amplitude (für ein festes $f_k$) als Funktion einer weiteren Frequenzvariablen $f_j$ angibt. Zusammengefasst kann man dann die komplexen Amplituden in einem zweidimensionalen Frequenzraum als Funktion der Frequenzvariablen $f_k$ und $f_j$ darstellen, weshalb der gesamte Prozess als zweidimensionale Fourier-Transformation bezeichnet wird.

Im folgenden soll zu Vereinfachung der Diskussion angenommen werden, dass die Rampen 48, 50, 52 alle um den gleichen Betrag T/3 gegeneinander versetzt sind, also:

$$t_0 = T/3$$

$$\Delta t_2 = T/3$$

$$\Delta t_3 = 2T/3.$$

Die komplexe Amplitude s des Basisbandsignals b lässt sich dann nach Normierung auf den Betrag 1 wie folgt als Funktion des Abtastindex k und des Rampenindex j beschreiben:

$$s(k, j) = \mathrm{Re}(\exp(\,i(\varphi_0 + 2\pi\,(f_R + f_v)\,k\,\tau\ +\ 2\pi\,f_v\,j\,T/3))).$$

Darin ist $\varphi_0$ ein nur vom Abstand R und der Rampensteigung abhängiger Phasenoffset, $f_R$ ist der vom Abstand R und der Rampensteigung abhängige Frequenzanteil, $f_v$ ist die Dopplerfrequenz, und $\tau$ ist die Abtastperiode bei der Abtastung der einzelnen Rampen (mit dem Index k).

Diese Formel gilt für alle drei Schaltzustände, nur mit dem Unterschied, dass j im ersten Schaltzustand nur die Werte 3n + 1, im zweiten Schaltzustand nur die Werte 3n + 2 und im dritten Schaltzustand nur die Werte 3n annehmen kann, mit n = 0, 1,....

Bei dem ersten Schritt der Fourier-Transformation (nach dem Index k) liefern die beiden ersten Terme in der obigen Formel einen Wert, der von der Frequenzvariablen $f_k$ abhängig ist. Der zweite Term enthält jedoch keine Größen, die vom Abtastindex k abhängig wären, und liefert deshalb nur einen konstanten Phasenfaktor, also einen Faktor, der von $f_k$ unabhängig ist, aber als Funktion der Zeit mit der Dopplerfrequenz $f_v$ oszilliert.

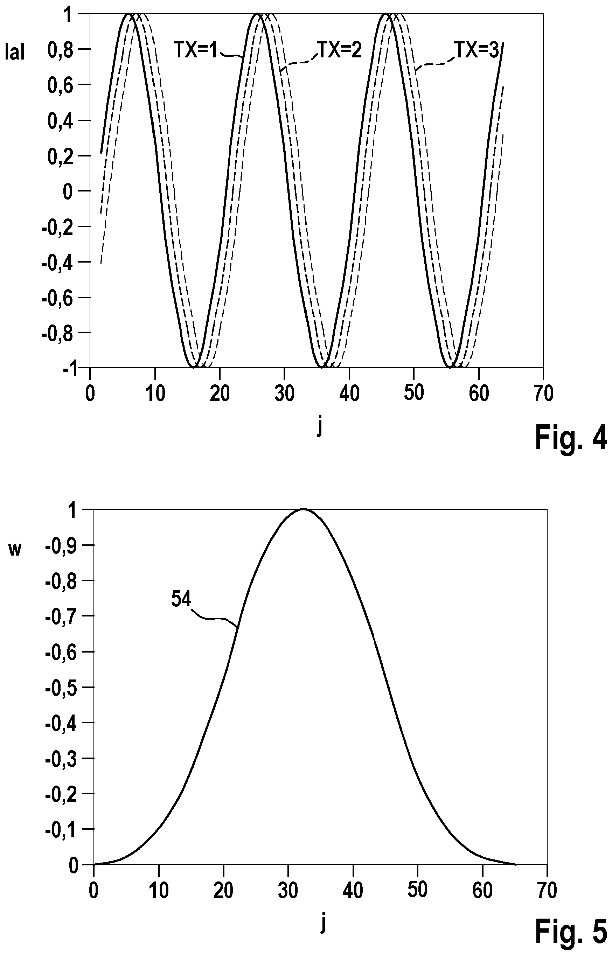

Solche Quasi-Zeitsignale, die man nach dem ersten Schritt der Fourier-Transformation für irgendein festes $f_k$ erhält, sind in Fig. 4 für die drei Schaltzustände TX = 1, 2, 3 dargestellt. Als Zeitvariable wird hier der Rampenindex j benutzt. Der Referenzzeitpunkt t = 0 ist der gleiche wie in Fig. 3 (t = j T/3).

Aufgrund des geringen Zeitversatzes (T/3) zwischen den Schaltzuständen, kann die Relativgeschwindigkeit und damit die Dopplerfrequenz als konstant betrachtet werden, so dass alle drei Signale in Fig. 4 die gleiche Frequenz haben und lediglich auf der Zeitachse um einen Indexpunkt gegeneinander verschoben sind.

Bevor nun der zweite Schritt der Fourier-Transformation ausgeführt wird, müssen diese Signale mit einer geeigneten Fensterfunktion gefenstert werden, um den abrupten Abbruch des Signals bei j = 0 und j = 65 zu mildern, der zu unerwünschten Artefakten in der Form von Nebenmaxima im Spektrum führen würde.

Ein Beispiel einer gebräuchlichen Fensterfunktion 54, ein sogenanntes Kaiserfenster, ist in Fig. 5 gezeigt. Die Kurve in Fig. 5 gibt - als Funktion des Zeilenindex j - das Gewicht w an, mit dem die Werte der in Fig. 4 gezeigten Signale für den betreffenden Zeilenindex j zu multiplizieren sind.

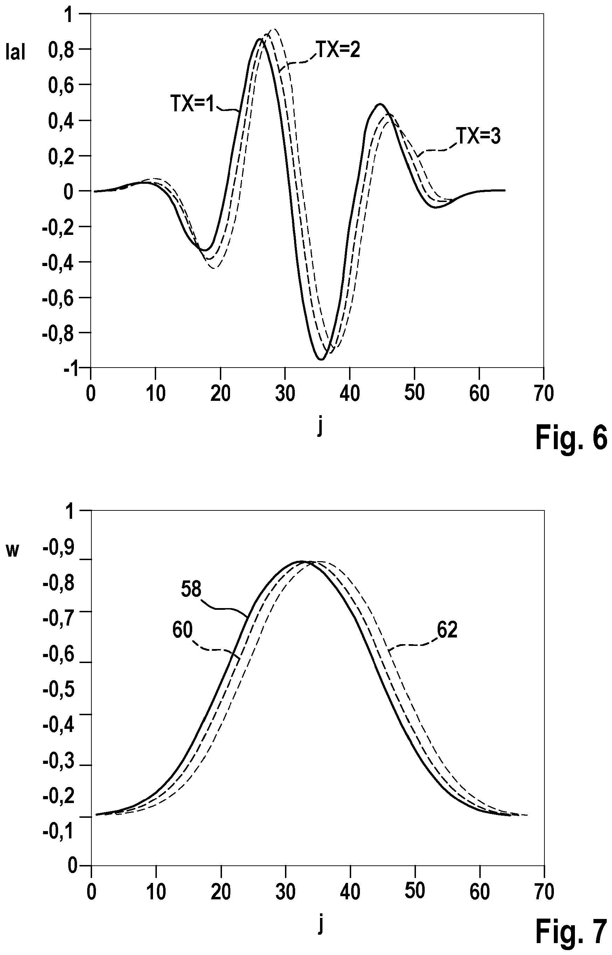

Fig. 6 zeigt das Ergebnis für den Fall, dass man für alle drei Signale dasselbe Fenster 54 verwendet, das in Fig. 5 dargestellt ist. Man sieht jedoch in Fig. 6, dass die drei Signale nicht nur auf der Zeitachse gegeneinander verschoben sind, sondern auch unterschiedliche Wellenformen haben, weil sie, da sie jeweils um einen anderen Betrag gegenüber der Kurve 54 verschoben sind, in unterschiedlicher Weise durch die Fensterfunktion beeinflusst werden. Diese Art der Fensterung würde deshalb bei dem zweiten Schritt der Fourier-Transformation zu zusätzlichen Phasenverschiebungen führen, die ein Vergleich der Phasen unmöglich machen oder zumindest erschweren würden. Die Fensterung wird deshalb mit Fensterfunktionen ausgeführt, die die Wellenform der gefensterten Signale unverändert lassen.

Das lässt sich beispielsweise dadurch erreichen, dass für jeden Schaltzustand eine eigene Fensterfunktion verwendet wird. Fig. 7 zeigt drei Fensterfunktionen, die durch Kurven 58, 60 und 62 angegeben sind. Die Kurve 58 wird für die Rampen 48 (TX = 1) benutzt, die Kurve 60 für die Rampen 50 (TX = 2) und die Kurve 62 für die Rampen 52 (TX = 3). Die Kurven 58, 60, 62 haben die gleiche Form wie das Kaiserfenster in Fig. 5, sind jedoch auf der Zeitachse um die gleichen Beträge (T/3) verschoben wie die zugehörigen Rampen und dementsprechend die Signale in Fig. 4.

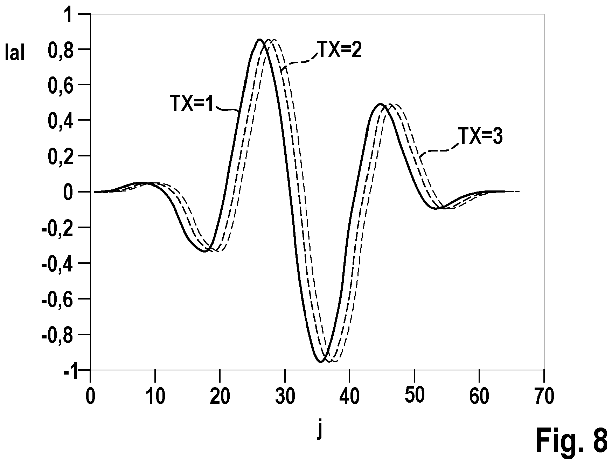

Das Ergebnis dieser Art der Fensterung ist in Fig. 8 gezeigt. Hier haben die Signale für TX = 1, TX = 2 und TX = 3 dieselbe Wellenform, und sie sind lediglich auf der Zeitachse gegeneinander verschoben. Bei der zweiten Stufe der Fourier-Transformation führt diese Verschiebung zu einem Phasenfaktor, der nicht von der Frequenzvariablen $f_k$ abhängig ist, sondern nur von der Frequenzvariablen $f_j$.

Wenn N die Anzahl der Perioden (mit je drei Rampen) in der Sequenz in Fig. 3 ist, so wird die schnelle Fourier-Transformation in der zweiten Stufe üblicherweise so ausgeführt, dass der Raum der Frequenzvariablen $f_j$ in N sogenannte Frequenzbins $\mu$ aufgeteilt wird ($\mu = 0, ...., N - 1$). Die Phasenfaktoren $\varphi_{TX,\mu}$ sind dann vom jeweiligen Frequenzbin $\mu$ abhängig und lassen sich für die Schaltzustände TX = 1, 2, 3 wie folgt angeben:

$$\varphi_{1,\mu} = \varphi_{0,\mu} \qquad\qquad \text{(nach Definition)}$$

$$\varphi_{2,\mu} = \varphi_{0,\mu} + (2\pi\ \mu/N) \cdot \Delta t_2 \qquad \text{(im hier betrachteten Beispiel ist } \Delta t_2 = T/3)$$

$$\varphi_{3,\mu} = \varphi_{0,\mu} + (2\pi\ \mu/N) \cdot \Delta t_3.$$

Wenn man nun für ein Objekt, das durch einen Peak an einem bestimmten Ort in dem zweidimensionalen Frequenzraum ($f_k$, $f_j$) repräsentiert wird, die Phasen für jeden Schaltzustand und jeden Auswertungskanal um den oben angegebenen Phasenversatz $\varphi_{TX,\mu}$ korrigiert, so erhält man einen Satz von Phasenbeziehungen, die trotz der Relativbewegung des Objekts praktisch nicht vom Objektabstand und auch nicht von der Relativgeschwindigkeit abhängen, sondern nur von dem durch den Azimutwinkel $\theta$ bestimmten Lauflängenunterschied und die deshalb durch Abgleich mit dem Antennendiagramm eine genaue Winkelschätzung ermöglichen.

**Patentansprüche**

1.  Verfahren zur Ortung von Objekten mit einem MIMO-FMCW-Radar, bei dem

    - ein rampenförmig frequenzmoduliertes Radarsignal gesendet wird, dessen Modulationsmuster eine Sequenz zeitversetzter aufeinander folgender Rampen (48, 50, 52) aufweist,
    - im Takt der aufeinander folgenden Rampen periodisch in Zyklen zwischen mindestens drei Schaltzuständen (TX) umgeschaltet wird, die sich in der Auswahl der zum Senden und zum Empfang verwendeten Antennenelemente (24, 26, 28, 30) unterscheiden,
    - empfangene Radarechos mit dem gesendeten Signal in ein Basisband heruntergemischt werden,
    - die für die verschiedenen Schaltzustände (TX) erhaltenen Basisbandsignale in Spektren transformiert werden, anhand derer die Abstände (R) und Relativgeschwindigkeiten (v) der Radarziele (12, 14) bestimmt werden, und
    - zur Bestimmung von Ortungswinkeln ($\theta$) der Radarziele die Phasen der für verschiedene Schaltzustände erhaltenen Basisbandsignale (b) miteinander verglichen werden, und
    - die Basisbandsignale gesondert für jeden Schaltzustand (TX) einer zweidimensionalen Fourier-Transformation unterzogen werden, wobei in der ersten Dimension Rampe für Rampe transformiert wird und in der zweiten Dimension über einen Rampenindex j transformiert wird, der die Rampen (48, 50, 52) innerhalb der Sequenz zählt, unter Verwendung von Fensterfunktionen (58, 60, 62) die die Wellenformen der Basisbandsignale bis auf eine Verschiebung längs der Zeitachse erhalten, und
    - die für verschiedene Schaltzustände erhaltenen Spektren einer frequenzabhängigen Phasenkorrektur unterzogen werden, die den Zeitversatz der Rampen kompensiert,
    - wobei die für die verschiedenen Schaltzustände (TX) verwendeten Fensterfunktionen die gleiche Form haben, jedoch zueinander den gleichen Zeitversatz aufweisen, wie die zugehörigen Rampen (48, 50, 52),
    - wobei die aufeinander folgenden Rampen (48, 50, 52) der Sequenz mit dem laufenden Rampenindex j gezählt werden, so dass
    - der Rampenindex j als Zeitvariable genutzt wird, und
    - auf einen festen Referenzzeitpunkt t=0 die erste Rampe (j=1) des Zyklus einen Zeitversatz $t_0$, die zweite Rampe (j=2) des Zyklus gegenüber der ersten Rampe des Zyklus einen Zeitversatz $\Delta t_2$, und die dritte Rampe (j = 3) des Zyklus gegenüber der ersten Rampe des Zyklus einen Zeitversatz $\Delta t_3$ hat,
    - wobei die Zeitdauern $\Delta t_2$ und $\Delta t_3$ unterschiedlich lange Zeitdauern sind.

2.  Verfahren nach Anspruch 1, bei dem nach jeder Rampe (48, 50, 52) auf einen anderen Schaltzustand (TX) umgeschaltet wird.

3.  Verfahren nach einem der vorstehenden Ansprüche, bei dem die Anzahl der Rampen je Sequenz größer als 20, vorzugsweise größer als 60 ist.

4.  MIMO-FMCW-Radarsensor mit einer Steuer- und Auswerteeinrichtung (22), in der ein Verfahren nach einem der Ansprüche 1 bis 3 implementiert ist.

**Claims**

1.  Method for locating objects using a MIMO FMCW radar, in which

- a ramp-shaped, frequency-modulated radar signal is transmitted, the modulation pattern of which has a sequence of time-shifted successive ramps (48, 50, 52),
- periodically switching cyclically between at least three switching states (TX) in time with the successive ramps, which states differ in the selection of the antenna elements (24, 26, 28, 30) used for transmission and reception,
- received radar echoes are downmixed with the transmitted signal into a baseband,
- the baseband signals obtained for the different switching states (TX) are transformed into spectra, based on which the distances (R) and relative speeds (v) of the radar targets (12, 14) are determined, and
- the phases of the baseband signals (b) obtained for different switching states are compared with one another to determine the locating angles ($\theta$) of the radar targets, and
- the baseband signals are subjected to a two-dimensional Fourier transform separately for each switching state (TX), in which the transform is performed ramp by ramp in the first dimension and the transform is performed via a ramp index j in the second dimension, which counts the ramps (48, 50, 52) within the sequence, using window functions (58, 60, 62) which preserve the waveforms of the baseband signals except for a shift along the time axis, and
- the spectra obtained for different switching states are subjected to a frequency-dependent phase correction which compensates for the time shift of the ramps,
- in which the window functions used for the different switching states (TX) have the same form but have the same time shift with respect to one another as the associated ramps (48, 50, 52),
- in which the successive ramps (48, 50, 52) of the sequence are counted with the current ramp index j, so that
- the ramp index j is used as time variable, and
- with respect to a fixed reference point in time t=0, the first ramp (j=1) of the cycle has a time shift $t_0$, the second ramp (j=2) of the cycle has a time shift $\Delta t_2$ with respect to the first ramp of the cycle, and the third ramp (j=3) of the cycle has a time shift $\Delta t_3$ with respect to the first ramp of the cycle,
- in which the time durations $\Delta t_2$ and $\Delta t_3$ are time durations of different lengths.

2. Method according to Claim 1, in which a switch is made to a different switching state (TX) after each ramp (48, 50, 52).

3. Method according to one of the preceding claims, in which the number of ramps per sequence is greater than 20, preferably greater than 60.

4. MIMO FMCW radar sensor with a control and evaluation device (22) in which a method according to one of Claims 1 to 3 is implemented.

**Revendications**

1. Procédé de localisation d'objets avec un radar MIMO-FMCW, dans lequel

- un signal radar à modulation de fréquence en forme de rampe est émis dont le schéma de modulation présente une séquence de rampes successives (48, 50, 52) décalées dans le temps,
- au rythme des rampes successives, périodiquement par cycles, une commutation est effectuée entre au moins trois états de commutation (TX) qui se distinguent par la sélection des éléments d'antenne (24, 26, 28, 30) utilisés pour l'émission et pour la réception,
- des échos radar reçus sont abaissés avec le signal émis en une bande de base,
- les signaux de bande de base obtenus pour les différents états de commutation (TX) sont transformés en spectres à l'aide desquels les distances (R) et les vitesses relatives (v) des cibles radar (12, 14) sont déterminées, et
- pour la détermination d'angles de localisation ($\theta$) des cibles radar, les phases des signaux de bande de base (b) obtenus pour différents états de commutation sont comparées les unes aux autres, et
- les signaux de bande de base sont soumis séparément pour chaque état de commutation (TX) à une transformation de Fourier bidimensionnelle, la transformation ayant lieu rampe par rampe dans la première dimension, et la transformation ayant lieu dans la deuxième dimension par l'intermédiaire d'un indice de rampe j qui compte les rampes (48, 50, 52) à l'intérieur de la séquence en utilisant des fonctions de fenêtre (58, 60, 62) qui maintiennent les formes d'onde des signaux de bande de base mis à part un décalage le long de l'axe du temps, et
- les spectres obtenus pour différents états de commutation sont soumis à une correction de phase dépendant de la fréquence qui compense le décalage dans le temps des rampes,
- les fonctions de fenêtre utilisées pour les différents états de commutation (TX) ayant la même forme mais présentant le même décalage dans le temps les unes par rapport aux autres que les rampes (48, 50, 52) associées,
- les rampes (48, 50, 52) successives de la séquence étant comptées à l'aide d'un indice de rampe j courant, de sorte que
- l'indice de rampe j est utilisé comme une variable de temps, et
- la première rampe (j=1) du cycle présente un décalage dans le temps $t_0$ par rapport à un temps de référence fixe t=0, la deuxième rampe (j=2) du cycle présente un décalage dans le temps $\Delta t_2$ par rapport à la première rampe du cycle, et la troisième rampe (j=3) du cycle présente un décalage dans le temps $\Delta t_3$ par rapport à la première rampe du cycle,
- les durées $\Delta t_2$ et $\Delta t_3$ étant des durées de longueur différente.

2. Procédé selon la revendication 1, dans lequel une commutation sur un autre état de commutation (TX) est effectuée après chaque rampe (48, 50, 52).

3. Procédé selon l'une quelconque des revendications précédentes, dans lequel le nombre des rampes par séquence est supérieur à 20, de préférence supérieur à 60.

4. Capteur radar MIMO-FMCW, comprenant un dispositif de commande et d'analyse (22) dans lequel est mis en œuvre un procédé selon l'une quelconque des revendications 1 à 3.

**Fig. 1**

Fig. 2

Fig. 3

Fig. 4

Fig. 5

Fig. 6

Fig. 7

Fig. 8

**IN DER BESCHREIBUNG AUFGEFÜHRTE DOKUMENTE**

**In der Beschreibung aufgeführte Patentdokumente**

- EP 2045877 A1
- WO 2010115418 A2
- JP 2003315447 A
- US 1008150795 A1
- US 5652589 A